# EUROPÄISCHE PATENTANMELDUNG

(11) **EP 0 670 324 A1**
(43) Veröffentlichungstag der Anmeldung: **06.09.1995**
(21) Anmeldenummer: 95101660.9
(22) Anmeldetag: 08.02.1995
(51) Int. Cl.: C07F 9/6571

(54) **Verfahren zur Herstellung cyclischer Vinylphosphonsäureester**

(30) Priorität: 04.03.1994 DE 4407272
(71) Anmelder: HOECHST AKTIENGESELLSCHAFT, D-65926 Frankfurt am Main (DE)
(72) Erfinder: Engelhardt, Fritz, Dr., D-60386 Frankfurt am Main (DE); Riegel, Ulrich, D-60386 Frankfurt am Main (DE); Kleiner, Hans-Jerg, Dr., D-61476 Kronberg (DE)

(57) **Zusammenfassung**

Die vorliegende Erfindung betrifft ein Verfahren zur Herstellung von Verbindungen der allgemeinen Formel I 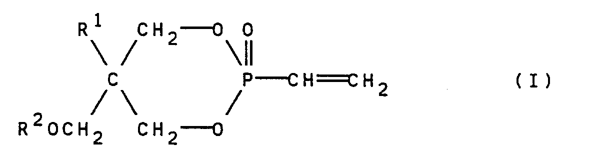
worin R¹ und R² wie in Anspruch 1 angegeben definiert sind, dadurch gekennzeichnet, daß ein 1,1,1-Tris(hydroxymethyl)(C₂-C₅)alkan oder 2,2-Bis-(hydroxymethyl)-1,3-propandiol mit Vinylphosphonsäureanhydrid umgesetzt wird.

## Beschreibung

Die vorliegende Erfindung betrifft ein Verfahren zur Herstellung cyclischer Vinylphosphonsäureester unter Verwendung von Vinylphosphonsäureanhydrid.

Cyclische Vinylphosphonsäureester sind bereits bekannt und in der EP-A 343 427 beschrieben. Vertreter dieser Stoffklasse, die mindestens zwei Doppelbindungen enthalten, können bei der Herstellung von Polymeren, insbesondere von wasserquellbaren Hydrogelen aus ungesättigten, hydrophilen Monomeren, als Vernetzer eingesetzt werden. Verbindungen mit nur einer Doppelbindung sind Vorstufen der Verbindungen mit zwei Doppelbindungen.

Die in der EP-A 343 427 beschriebene Synthese aus 1,1,1-Tris(hydroxmethyl)alkanen bzw. 2,2-Bis-(hydroxymethyl)-1,3-propandiol und Vinylphosphonsäuredichlorid unter Verwendung von Basen als Säurefänger ist nachteilig. Sie bedingt nämlich die Rückführung der Basen durch Zerlegen der anfallenden Salze mit organischen Laugen. Dabei fallen aber salzhaltige Abwässer an.

Es besteht somit Bedarf nach einem vorteilhafteren Herstellungsverfahren.

Die vorliegende Erfindung betrifft ein Verfahren zur Herstellung von Verbindungen der allgemeinen Formel I 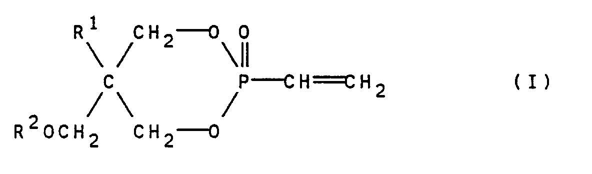
worin
- R¹: (C₁-C₄)-Alkyl oder -CH₂OR³ bedeutet;
- R²: falls R¹ (C₁-C₄)-Alkyl ist, Wasserstoff oder 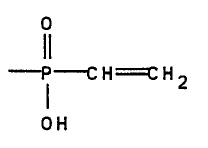 bedeutet und
falls R¹ -CH₂OR³ ist, zusammen mit R³ eine Gruppe 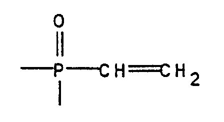 bildet,
dadurch gekennzeichnet, daß ein 1,1,1-Tris(hydroxymethyl)(C₂-C₅)alkan oder 2,2-Bis-(hydroxymethyl)-1,3-propandiol mit Vinylphosphonsäureanhydrid umgesetzt wird.

Für R¹ stehendes (C₁-C₄)-Alkyl kann geradkettig oder verzweigt sein und bedeutet beispielsweise Methyl, Ethyl, n-Propyl, i-Propyl, n-Butyl, sek-Butyl, i-Butyl oder tert.Butyl.

In der allgemeinen Formel I bedeutet R¹ bevorzugt Ethyl und R² Wasserstoff oder

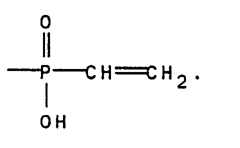

Es ist außerdem bevorzugt, wenn R¹ -CH₂OR³ bedeutet und R² zusammen mit R³ eine Gruppe 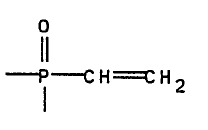
bildet.

Bevorzugt wird somit das erfindungsgemäße Verfahren eingesetzt zur Herstellung der Verbindungen der Formel Ia 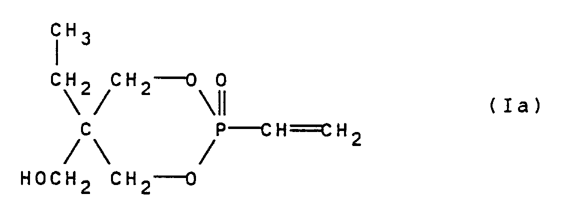
der Formel Ib 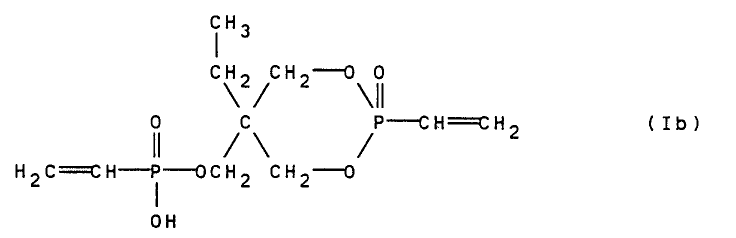
sowie der Formel Ic 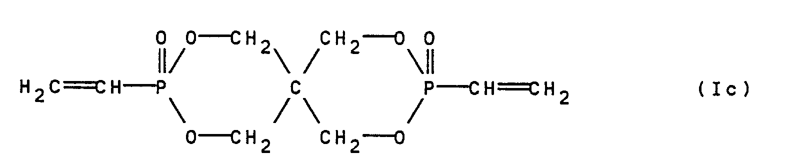
Die Molverhältnisse der Reaktanten werden bei dem erfindungsgemäßen Verfahren zweckmäßigerweise je nach herzustellender Verbindung gewählt. Beispielsweise wird zur Herstellung der Verbindung der Formel Ia 1,1,1-Tris(hydroxymethyl)propan mit Vinylphosphonsäureanhydrid bevorzugt im Molverhältnis 1 : 2, zur Herstellung der Verbindung der Formel Ib aber bevorzugt im Molverhältnis 1 : 3 umgesetzt. Zur Herstellung der Verbindung der Formel Ic wird 2,2-Bis-(hydroxymethyl)-1,3-propandiol mit Vinylphosphonsäureanhydrid bevorzugt im Molverhältnis 1 : 3, besonders bevorzugt 1 : 4, umgesetzt. Im Einzelfall sind allerdings auch höhere als die angegebenen Molverhältnisse möglich.

Das erfindungsgemäße Verfahren kann mit oder ohne Einsatz eines Lösungsmittels durchgeführt werden. Soll ein Lösungsmittel verwendet werden, kommen dafür beispielsweise Dimethylformamid, Acetonitril, Ethylacetat oder Dichlormethan in Frage.

Das erfindungsgemäße Verfahren wird in der Regel bei Temperaturen von -10°C bis 150°C durchgeführt. Bevorzugt sind Temperaturen von 30 bis 80°C.

Es kann zweckmäßig sein, das erfindungsgemäße Verfahren in Gegenwart eines Polymerisationsinhibitors durchzuführen. Geeignete Polymerisationsinhibitoren sind beispielsweise Hydrochinon, Hydrochinonmonomethylether und Phenothiazin.

Das erfindungsgemäße Verfahren führt zunächst immer zu einem Reaktionsgemisch, das neben einer Verbindung der allgemeinen Formel I bedeutende Mengen Vinylphosphonsäure, die aus dem Anhydrid gebildet wurde enthält. Diese kann aber durch geeignete und an sich bekannte Methoden abgetrennt werden.

Soll die hergestellte Verbindung der allgemeinen Formel I als Vernetzer bei der Herstellung von Hydrogelen verwendet werden, so ist eine Abtrennung der Vinylphosphonsäure nicht erforderlich und das erhaltene Reaktionsgemisch kann direkt eingesetzt werden.

1,1,1-Tris(hydroxymethyl)alkane, 2,2-Bis-(hydroxymethyl)-1,3-propandiol und Vinylphosphonsäureanhydrid sind wohlfeile Verbindungen, die im Handel erhältlich oder nach bekannten Methoden herstellbar sind.

### Beispiel 1

496 g (3,7 Mol) 1,1,1-Tris(hydroxymethyl)propan werden in 740 g Dichlormethan gelöst und dazu unter lebhaftem Rühren 2000 g einer 50 %igen Lösung von Vinylphosphonsäureanhydrid in Dichlormethan (11,11 Mol) in 2 h bei 30°C eingetropft. Dann wird 30 h am Rückfluß gehalten. Nach Abkühlung wird die entstandene Reaktionslösung mit Filterhilfe versetzt, verrührt und abgesaugt. Das Filtrat wird im Vakuum von dem Dichlormethan befreit. Man erhält ca. 1400 g einer öligen Reaktionsmischung, die infolge einer 31-P-NMR-Messung folgende Zusammensetzung an Hauptkomponenten aufweist: 9,5 % der Verbindung Ia, 44,5 % der Verbindung Ib, 43,5 % Vinylphosphonsäure.

### Beispiel 2

675 g (7,5 Mol) Vinylphosphonsäureanhydrid werden auf 40°C erwärmt und 335,2 g (2,5 Mol) 1,1,1-Tris(hydroxymethyl)propan unter lebhaftem Rühren portionsweise eingetragen. Die Temperatur steigt auf 60 bis 70°C an und wird unter Kühlung gehalten. Anschließend wird das Reaktionsgut 24 h bei 45 bis 50°C gerührt, dann wird 1 g Hydrochinonmonomethylether zugesetzt und abgekühlt. Man erhält 1011 g einer öligen Reaktionsmischung, die infolge einer 31-P-NMR-Messung folgende Zusammensetzung an Hauptkomponenten aufweist: 5 % der Verbindung Ia, 45 % der Verbindung Ib, 45 % Vinylphosphonsäure.

### Beispiel 3

1000 g (11,11 Mol) Vinylphosphonsäureanhydrid werden auf 53°C erwärmt und 378 g (2,78 Mol) 2,2-Bis-hydroxymethyl-1,3-propandiol unter lebhaftem Rühren portionsweise zugegeben, die Temperatur steigt dabei auf 80°C an. Etwa 24 h wird bei 50°C nachgerührt, dann abgekühlt und Isopropanol zugegeben. Nach mehreren Stunden Nachrühren wird abgesaugt und mit Aceton gewaschen. Man erhält 340 g der Verbindung Ic mit einem Schmelzpunkt von 157 bis 159°C. Das entspricht einer Ausbeute von 44 % der Theorie.

## Patentansprüche

1. Verfahren zur Herstellung von Verbindungen der allgemeinen Formel I 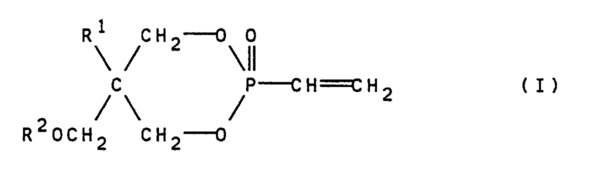 worin
R¹ (C₁-C₄)-Alkyl oder -CH₂OR³ bedeutet;
R² falls R¹ (C₁-C₄)-Alkyl ist, Wasserstoff oder 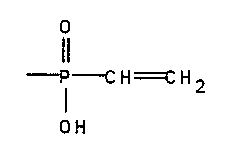 bedeutet und
falls R¹ -CH₂OR³ ist, zusammen mit R³ eine Gruppe 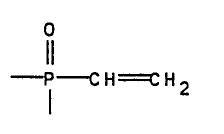 bildet,
dadurch gekennzeichnet, daß ein 1,1,1-Tris(hydroxymethyl)(C₂-C₅)alkan oder 2,2-Bis-(hydroxymethyl)-1,3-propandiol mit Vinylphosphonsäureanhydrid umgesetzt wird.

2. Verfahren gemäß Anspruch 1, dadurch gekennzeichnet, daß R¹ Ethyl und R² Wasserstoff oder 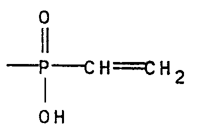 bedeutet.

3. Verfahren gemäß Anspruch 1, dadurch gekennzeichnet, daß R¹ -CH₂OR³ bedeutet und R² zusammen mit R³ eine Gruppe 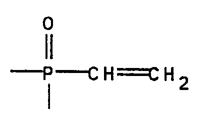 bildet.

4. Verfahren gemäß einem oder mehreren der Ansprüche 1 bis 3, dadurch gekennzeichnet, daß ohne Lösungsmittel gearbeitet wird.

5. Verfahren gemäß einem oder mehreren der Ansprüche 1 bis 3, dadurch gekennzeichnet, daß mit einem Lösungsmittel gearbeitet wird.

6. Verfahren gemäß Anspruch 5, dadurch gekennzeichnet, daß als Lösungsmittel Dimethylformamid, Acetonitril, Ethylacetat oder Dichlormethan eingesetzt wird.

7. Verfahren gemäß einem oder mehrere der Ansprüche 1 bis 6, dadurch gekennzeichnet, daß es in Gegenwart eines Polymerisationsinhibitors durchgeführt wird.

8. Verfahren gemäß Anspruch 7, dadurch gekennzeichnet, daß als Polymerisationsinhibitoren Hydrochinon, Hydrochinonmonomethylether oder Phenothiazin eingesetzt werden.
